# EUROPÄISCHE PATENTSCHRIFT

(11) **EP 0 658 717 B1**
(45) Veröffentlichungstag und Bekanntmachung des Hinweises auf die Patenterteilung: **04.03.1998**
(21) Anmeldenummer: 94116600.1
(22) Anmeldetag: 21.10.1994
(51) Int. Cl.: F16L 59/06

(54) **Kühl- und/oder Gefriergerät und Verfahren zur Herstellung eines Vakuumisolationsformkörpers des Kühl- und/oder Gefriergeräts**
Refrigerator and/or freezer and method of manufacturing a vacuum insulating element of the refrigerator and/or freezer
Réfrigérateur et/ou congélateur et procédé de fabrication d'un élément d'isolation à vide du réfrigérateur et/ou congélateur

(30) Priorität: 16.12.1993 DE 4342946
(43) Veröffentlichungstag der Anmeldung: 21.06.1995
(73) Patentinhaber: AEG Hausgeräte GmbH, 90429 Nürnberg (DE)
(72) Erfinder: Jürgensen, Heinz, Dr.-Ing., D-34253 Lohfelden (DE); Krug, Günter, Dipl.-Ing., D-34302 Guxhagen (DE)

(56) Entgegenhaltungen:
- EP-A- 0 263 928
- EP-A- 0 459 085
- DE-B- 1 954 992

## Beschreibung

Die Erfindung betrifft ein Kühl- und/oder Gefriergerät.

Zunehmend kommen Kühl- und/oder Gefriergeräte mit Vakuumisolationskörpern auf den Markt. Ein bekannter derartiger Formkörper (DE 36 30 399 A1), der als Paneel, Behälter oder Rohr ausgebildet sein kann, weist einen evakuierten und mit einem wärmeisolierendem Stützmittel gefüllten Hohlraum auf, der zwischen benachbart mit Abstand voneinander angeordneten und vakuumdicht miteinander im Randbereich verbundenen Wandflächen gebildet ist. Dabei befindet sich zwischen wenigstens einer der Wandflächen und dem Kieselgur-Stützmittel eine luftdurchlässige Matte aus Faservlies, die ein großflächiges Absaugen von Gasen aus dem Hohlraum mittels eines Abpumpstutzens ermöglicht, der sich in der der Matte benachbarten Wandfläche befindet. Insbesondere bei der Herstellung von Behältern, aber auch bei planen oder gewölbten Paneelen besteht die Gefahr, daß beim Befüllen des noch zu evakuierendem Hohlraums mit pulverförmigem Stützmittel die Luft am betreffenden Arbeitsplatz mit Staub belastet wird. Zudem kann bei der Befüllung von Behältern nicht sichergestellt werden, daß Kavitäten in der Stützmittelfüllung vermieden werden, die bei der Evakuierung des Hohlraums zu Einfallstellen der Behälterwände führen können.

Der Erfindung liegt die Aufgabe zugrunde, bei einem Kühl- und/oder Gefriergerät Maßnahmen zu treffen, durch welche die Wandungen des Gehäuses und der Tür als formstabiler Vakuumisolationsformkörper ausgestaltet werden können und das Einbringen von Stützmittel vereinfacht wird.

Die Lösung dieser Aufgabe erfolgt gemäß der Erfindung durch die Merkmale des ersten Anspruchs.

Bei einem erfindungsgemäßen Kühl- und/oder Gefriergerät wird das Stützmittel in einer für den Einbau geeigneten Verpackung am Arbeitsplatz, an welchem der Vakuumisolationsformkörper erstellt wird, bereitgestellt. Dabei wird die Verpackung, die als für das Stützmittel dichte, jedoch gasdurchlässige Hülle ausgebildet ist, mit in den zu evakuierenden Hohlraum eingebracht. Bei einem planen oder gewölbten Paneel ist der Hohlraum zweckmäßiger Weise mit lediglich einem Stützmittelbeutel ausgefüllt, wenn nicht große Abmessungen die Aufteilung in mehrere Stützmittelbeutel erfordern. Bei Behältern mit Kanten ist es dagegen zweckmäßig, jedem durch eine Kanten begrenzten Wandabschnitt einen eigenen Stützmittelbeutel zuzuordnen. Dabei sind die Stützmittelbeutel in Anpassung an die Abmessungen des zu evakuierenden Hohlraums bzw. Hohlraumabschnitts vorgeformt und vorgepreßt, so daß der Hohlraum möglichst spaltfrei ausgefüllt ist und auch aneinander anstoßende Stirnseitenbereiche bei der Anwendung mehrerer Stützmittelbeutel eng aneinander angrenzen. Um ein zusätzliches Pressen der Stützmittelbeutel im eingebauten Zustand zu ermöglichen, ohne dabei die glatte Oberfläche von Wandflächen zu verformen, können die unmittelbar an einem Stützmittelbeutel anliegenden Wandflächen zumindest in ihrem Randbereich eine umlaufende Sicke aufweisen, die beim Pressen der betreffenden Wandfläche vor oder während des Evakuiervorganges die notwendige Beweglichkeit innerhalb der Wandfläche zulassen. Eine Streckung oder Stauchung in den Flächenabschnitten außerhalb der Sicke tritt dadurch nicht ein. Bei einem Kühl- oder Gefriergerätes mit einer in den Kühlraum eingezogenen Nische oder Gehäusestufe für einen Kompressor oder dgl. ist es zweckmäßig, den Absaugstutzen einem zu dieser Einformung gehörenden Wandabschnitt zuzuordnen. Er steht dadurch nicht über die übrige Gehäusekontur hinaus, die insbesondere bei in ein Möbel eingebautem Gerät eng an benachbarte Wände angestellt werden.

Stauchung in den Flächenabschnitten außerhalb der Sicke tritt dadurch nicht ein. Wird das Wärmeisolierelement als Kühlbehälter eines Kühl- oder Gefriergerates mit einer in den Kühlraum eingezogenen Nische oder Gehäusestufe für einen Kompressor oder dgl. ausgebildet, dann ist es zweckmäßig, den Absaugstutzen einem zu dieser Einformung gehörenden Wandabschnitt zuzuordnen. Er steht dadurch nicht über die übrige Gehäusekontur hinaus, die insbesondere bei in ein Möbel eingebautem Gerät eng an benachbarte Wände angestellt werden.

Die Erfindung ist nachfolgend anhand der Prinzipskizzen eines Ausführungsbeispiels näher erläutert.

Es zeigen:
- Fig. 1: ein Kühlgerätegehäuse im Querschnitt und
- Fig. 2: eine vergrößerte Darstellung eines Eckbereichs mit benachbartem Abpumpstutzen.

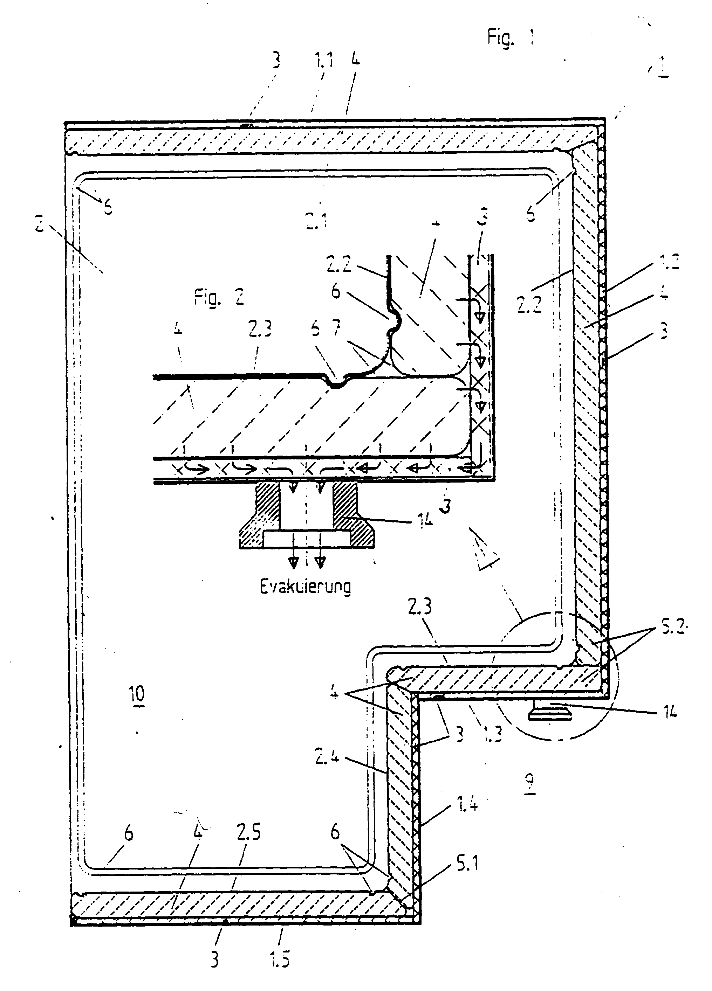

Ein Außengehäuse 1 aus winklig aneinandergesetzten und zu einem Behälter geformten äußeren Wandflächen, wie Deckenwand 1.1, Rückwand 1.2, Nischenwände 1.3 und 1.4 sowie Bodenwand 1.5 und nicht dargestellte Seitenwände, umschließt einen Innenbehälter 2 aus Kunststoff, der parallel zu den äußeren Wandflächen 1.1 ... benachbart mit Abstand voneinander angeordnete entsprechende innere Wandflächen 2.1 bis 2.5 und daran angesetzte Seitenwände aufweist. An die Innenseiten der äußeren Wandflächen 1.1 ... ist jeweils vollflächig eine gasdurchlässige Matte 3 angesetzt und insbesondere angeklebt, die aus einem Gewebe, einem Stützgeflecht, Schaumstoff oder dgl. luftdurchlässigen Material bestehen kann und ganzflächig einen Gasströmungsweg zu einem in die äußere Wandfläche 1.3 eingesetzten Abpumpstutzen 14 bildet. Der verbleibende Hohlraum zwischen der vorzugsweise aus mehreren, jeder Wandfläche 1.1 ... zugeordneten Teilen bestehenden Matte 3 und der inneren Wandfläche 2 ... ist mit einem Stützmittelbeutel 4 ausgefüllt. Die Stützmittelbeutel 4 sind dem für sie vorgesehenen Hohlraumteil in Form und Abmessung angepaßt, so daß keine technisch relevanten unausgefüllten Hohlraumteile verbleiben. Die Randbereiche der Stützmittelbeutel können dabei nach Art von Gehrungskanten 5.1 geformt sein und aneinanderstoßen, es können jedoch die Randbereiche, wie bei 5.2 angedeutet, stumpf miteinander verbunden sein, wobei eine schmale Stirnseite eines Stützmittelbeutels an einer großen Seitenfläche des angrenzenden Stützbeutels 4 möglichst spaltfrei anliegt. Die Stützmittelbeutel 4 sind dabei dadurch gebildet, daß pulverförmiges Stützmittel, insbesondere Kieselgurr oder Kieselsäurepulver, in einen gaspermeablen aber staubdichten Beutel eingefüllt wird. Zur Erleichterung der Handhabung am Arbeitsplatz, an welchem der Kühlschrank hergestellt wird, sind die so gebildeteten Stützmittelbeutel 4 vorgeformt und so vorgepreßt, daß sie eine für die Verarbeitung erforderliche Stabilität besitzen und keine partielle Dickenänderung erfahren, wenn bei vakuumdicht miteinander verbundenen Wandflächen 1 ... und 2 ... über den Abpumpstutzen 14 Luft und andere Gase aus dem Zwischenraum zumindest weitgehend abgepumpt werden. Hohlräume im Stützmittel sind dann unschädlich, wenn sie nicht nachträglich zusammengedrückt werden können. Dabei wird zweckmäßigerweise nach dem Einbringen der Stützmittelbeutel vor oder während des Evakuiervorganges auf die sich gegenüber stehenden Wandflächen 1 und 2 flächig eine mechanische Preßkraft ausgeübt, um den Entgasungsvorgang zu unterstützen und die mechanische Stabilität dauerhaft sicherzustellen. Aus dem Stützmittelbeutel ausströmende Gasanteile können dann durch die poröse Matte 3 zum Abpumpstutzen 14 hinströmen.

Das für die Verwendung bei einem Kühl- oder Gefriergerät vorgesehene und vorliegend als Behälter 10 ausgebildete Wärmeisolierelement ist mit einer am Übergang von der RÜckwand 1.2 zur Bodenwand 1.5 vorgesehenen stufenförmigen Einformung versehen, die durch die Wandflächen 1.3 und 1.4 begrenzt und als Nische 9 für die Unterbringung eines Kältemittelkompressors und ggf. anderer Elemente dient. Dabei ist in der waagerecht verlaufenden Nischenwand 1.3 der Abpumpstutzen 14 vorgesehen, so daß er in einem geschütztem Bereich liegt und dennoch frei zugänglich ist.

Um zu vermeiden, daß die innenliegenden Wandflächen 2.1 ... beim mechanischen Preßvorgang verformt werden, sind sie zumindest in ihrem Randbereich mit einer vorzugsweise umlaufenden Sicke 6 versehen, die nach Art eines Scharniers zu den jeweils außenliegenden Wandflächenabschnitten hin wirken und Bewegungen auffangen, die beim Preßvorgang auftreten. Die Sicken 6 graben sich dabei in die Stützmittelbeutel 4 ein.

Der zur Aufnahme des pulverförmigen Stützmittels dienende Beutel 7 besteht aus dichtem Gewebe oder Faservlies einer gaspermeablen Folie oder dgl. porösem Material, die ausreichend flexibel sind, um die bei der Formung und dem Preßvorgang auftretenden Formänderungen aufnehmen zu können, ohne zu reißen.

Das vorzugsweise aus Metallblech, insbesondere Edelstahl bestehende vakuumdichte Außengehäuse 1 ist mit dem bevorzugt aus Kunststoff bestehenden und vorzugsweise mit einer vakuumdichten Kunststoff-Sperrschichtfolie versehenen Innenbehälter 2 an den Randzonen vakuumdicht verklebt oder anderweitig dicht verbunden. Dabei kann eine geringfügige Gasdurchlässigkeit akzeptiert werden, weil Kieselsäure als Stützmittel eine gasabsorbierende Gettereigenschaft besitzt, die das erforderliche Vakuum über einen langen Zeitraum aufrecht erhält. Die porösen Beutel 7 ermöglichen dabei den freien Zutritt eindiffundierter Gase zur Kieselsäure. Im übrigen kann die Matte 3 auch zwischen geschichtet angeordneten Beuteln 7 liegen.

## Patentansprüche

1. Kühl- und/oder Gefriergerät mit einem Vakuumisolationsformkörper, der einen evakuierten und mit einem wärmeisolierenden pulverförmigen Stützmittel (4) gefüllten Hohlraum zwischen benachbart mit Abstand voneinander angeordneten vakuumdicht miteinander im Randbereich verbundenen Wandflächen aufweist, wobei zwischen einer Wandfläche und dem Stützmittel eine luftdurchlässige Matte (3) und ein Abpumpstutzen (14) in dieser Wandfläche vorgesehen ist und wobei das Stützmittel in wenigstens einem porösen Beutel (7) eingeschlossen ist, der zwischen die andere Wandfläche (2) und die Matte (3) eingelegt ist.

2. Kühl- und/oder Gefriergerät nach Anspruch 1, dadurch gekennzeichnet, daß bei einem Behälter einzelnen Wandabschnitten (1.1 ... 1.5) eigene Stützmittelbeutel (4) und Matten (3) zugeordnet sind, die in ihren Stirnseitenbereichen (5.1, 5.2) eng aneinander angesetzt sind.

3. Kühl- und/oder Gefriergerät nach Anspruch 1 oder 2, dadurch gekennzeichnet, daß die unmittelbar an einem Stützmittelbeutel (4) anliegende Wandfläche (2) zumindest in ihrem Randbereich eine umlaufende Sicke (6) aufweist.

4. Kühl- und/oder Gefriergerät nach Anspruch 1 oder einem der folgenden, dadurch gekennzeichnet, daß der Vakuumisolationsformkörper als Behälter mit einer in den Kühlraum eingezogenen Nische (9) für einen Kompressor ausgebildet ist und daß der Abpumpstutzen (14) an einem äußeren Wandabschnitt (1.3) der Nische (9) vorgesehen ist.

5. Kühl- und/oder Gefriergerät nach Anspruch 1 oder einem der folgenden, dadurch gekennzeichnet, daß der oder die Stützmittelbeutel (4) in Anpassung an die Abmessungen des Hohlraumes vorgeformt und vorgepreßt ist oder sind.

6. Kühl- und/oder Gefriergerät nach Anspruch 1 oder einem der folgenden, dadurch gekennzeichnet, daß die Innenwände (2) und/oder die Außenwände (1) des Vakuumisolationsformkörpers aus Kunststoff bestehen.

7. Kühl- und/oder Gefriergerät nach Anspruch 6, dadurch gekennzeichnet, daß die Kunststoffwände (1, 2) mit einer vakuumdichten Sperrschichtfolie versehen sind.

8. Kühl- und/oder Gefriergerät nach Anspruch 1 oder einem der folgenden, dadurch gekennzeichnet, daß das Stützmittel Kieselgurr- oder Kieselsäurepulver ist.

9. Verfahren zur Herstellung eines Vakuumisolationsformkörpers für ein Kühl- und/oder Gefriergerät nach Anspruch 1 oder einem der folgenden, dadurch gekennzeichnet, daß der oder die vorgeformten und vorgepreßten Stützmittelbeutel in den Hohlraum eingebracht werden und daß danach eine äußere Preßkraft auf die sich gegenüberstehenden Wandflächen ausgeübt und gleichzeitig oder nach dem Preßbeginn verzögert der Hohlraum evakuiert wird.

## Claims

1. Refrigerator and/or freezer appliance, having a vacuum insulation moulded body and therein a cavity, which is evacuated and filled with a heat-insulating, powdered support agent (4) between wall faces spaced adjacent to one another and joined together at the periphery in a vacuum-tight manner, wherein between one wall face and the support agent an air-permeable matting (3) and a pump discharge nozzle (14) are provided in this wall face and wherein the support agent is enclosed in at least one porous sachet (7), which is inserted between the other wall face (2) and the matting (3).

2. Refrigeration and/or freezer appliance according to claim 1, characterised in that in one container, individual wall sections (1.1 ... 1.5) are allocated their own support agent sachets (4) and mattings (3), which abut one another closely in their end-face regions (5.1, 5.2).

3. Refrigeration and/or freezer appliance according to claim 1 or 2, characterised in that the wall face (2) directly abutting a support agent sachet (4) has a continuous bead (6) at least in its edge region.

4. Refrigeration and/or freezer appliance according to claim 1 or one of the subsequent claims, characterised in that the vacuum insulation moulded body is formed as a vessel with a niche (9) drawn into the refrigeration chamber for a compressor, and in that the pump discharge nozzle (14) is provided on an outer wall section (1.3) of the niche (9).

5. Refrigeration and/or freezer appliance according to claim 1 or one of the subsequent claims, characterised in that the support agent sachet(s) (4) are pre-formed and pre-compressed so as to match the dimensions of the cavity.

6. Refrigeration and/or freezer appliance according to claim 1 or one of the subsequent claims, characterised in that the inner walls (2) and/or the outer walls (1) of the vacuum insulation moulded body consist of plastics material.

7. Refrigeration and/or freezer appliance according to claim 6, characterised in that the plastics material walls (1, 2) are provided with a vacuum-tight barrier foil.

8. Refrigeration and/or freezer appliance according to claim 1 or one of the subsequent claims, characterised in that the support agent is diatomaceous earth or silicic acid powder.

9. Method of manufacturing a vacuum insulation moulded body for a refrigeration and/or freezer appliance according to claim 1 or one of the subsequent claims, characterised in that the pre-formed and pre-compressed support agent sachets are inserted into the cavity and in that afterwards an external pressure is exerted on the opposing wall faces and simultaneously. or delayed after the start of pressure. the cavity is evacuated.

## Revendications

1. Appareil de réfrigération et/ou de congélation avec un corps de moulage d'isolation de vide qui présente un espace creux évacué et rempli d'un support pulvérulent (4) isolant thermiquement entre des surfaces de paroi avoisinantes, disposées à une certaine distance l'une de l'autre reliées de manière étanché au vide l'une à l'autre dans la zone de bord, où sont prévus entre une surface de paroi et le support une natte (3) perméable à l'air et une tubulure d'évacuation par pompe (14) dans cette surface de paroi, et où le support est enfermé au moins dans un sac poreux (7) qui est placé entre l'autre surface de paroi (2) et la natte (3).

2. Appareil de réfrigération et/ou de congélation selon la revendication 1, caractérisé en ce que, dans le cas d'un récipient, sont associés à des tronçons de paroi individuels (1.1 ... 1.5) des sachets de support (4) et des nattes (3) propres qui sont appliqués étroitement les uns contre les autres par leurs zones latérales frontales (5.1, 5.2).

3. Appareil de réfrigération et/ou de congélation selon la revendication 1 ou 2, caractérisé en ce que la surface de paroi (2) s'appliquant directement à un sachet de support (4) présente au moins dans sa zone de bord une moulure s'étendant tout autour (6).

4. Appareil de réfrigération et/ou de congélation selon la revendication 1 ou l'une des suivantes, caractérisé en ce que le corps de moulage d'isolation de vide est réalisé sous forme de récipient avec un enfoncement (9) rentrant dans le compartiment réfrigérateur pour un compresseur, et en ce que la tubulure d'évacuation par pompe (14) est prévue sur un tronçon de paroi extérieur (1.3) de l'enfoncement (9).

5. Appareil de réfrigération et/ou de congélation selon la revendication 1 ou l'une des suivantes, caractérisé en ce que le ou les sachets de support (4) sont moulés préalablement ou pressés préalablement pour s'adapter aux dimensions de l'espace creux.

6. Appareil de réfrigération et/ou de congélation selon la revendication 1 ou l'une des suivantes, caractérisé en ce que les parois intérieures (2) et/ou les parois extérieures (1) du corps de moulage d'isolation de vide sont réalisées en matière synthétique.

7. Appareil de réfrigération et/ou de congélation selon la revendication 6, caractérisé en ce que les parois en matière synthétique (1, 2) sont pourvues d'une feuille d'arrêt étanche au vide.

8. Appareil de réfrigération et/ou de congélation selon la revendication 1 ou l'une des suivantes, caractérisé en ce que le support est une poudre de terre d'infusoires ou d'acide silicique.

9. Procédé de fabrication d'un corps de moulage d'isolation de vide pour un appareil de réfrigération et/ou de congélation selon la revendication 1 ou l'une des suivantes, caractérisé en ce que le ou les sachets de support formés préalablement ou pressés préalablement sont introduits dans l'espace creux et en ce qu'il sera exercé ensuite une force de pression extérieure sur les surfaces de paroi opposées et que l'espace creux est évacué en même temps ou selon un décalage après le début d'application de pression.
